# EUROPÄISCHE PATENTSCHRIFT

(11) **EP 0 794 444 B1**
(45) Veröffentlichungstag und Bekanntmachung des Hinweises auf die Patenterteilung: **04.08.2004**
(21) Anmeldenummer: 97101845.2
(22) Anmeldetag: 06.02.1997
(51) Int. Cl.: G02B 6/28

(54) **Anordnung zur Übertragung von digitalen Daten über ein aus Lichtwellenleitern bestehendes optisches Netzwerk**
Device for digital data transmission via a waveguide optical network
Dispositif de transmission de données numériques à travers un réseau optique de guides d'onde

(30) Priorität: 04.03.1996 DE 19608172
(43) Veröffentlichungstag der Anmeldung: 10.09.1997
(73) Patentinhaber: Airbus Deutschland GmbH, 21129 Hamburg (DE)
(72) Erfinder: Kuhlmann, Holger, Dipl.-Ing., 21732 Krummendeich (DE)
(74) Vertreter: Hansmann, Dierk, Dipl.-Ing.

(56) Entgegenhaltungen:
- EP-A- 0 206 577
- EP-A- 0 451 549
- WO-A-90/02349
- US-A- 5 495 462
- PATENT ABSTRACTS OF JAPAN vol. 014, no. 341 (P-1081), 24.Juli 1990 & JP 02 120705 A (FURUKAWA ELECTRIC CO LTD:THE), 8.Mai 1990,

## Beschreibung

Die Erfindung betrifft eine Anordnung zur Übertragung von digitalen Daten über ein aus Lichtwellenleitern bestehendes optisches Netzwerk, wobei die Lichtwellenleiter an ihren Verbindungsstellen passive Knotenpunkte bilden, die eine Aufteilung der in Form von Licht übertragenen Daten in die zusammengeführten Lichtwellenleiter bewirken.

Die Übertragung von digitale Daten darstellenden LichtSignalen über ein optisches Medium ist bekannt. Die Topologie der genannten Netzwerke, d.h. die Lehre von der Lage und Anordnung derartiger geometrischer Gebilde im Raum, erfolgt meistens von Punkt zu Punkt. Im Fall von langen übertragungswegen werden bei den eingangs beschriebenen Anordnungen Übertrager bzw. Verstärker verwendet, um die LichtSignale zu verstärken.

Eine Alternative ist die Ringarchitektur eines optischen Netzwerkes, bei der in jedem Knotenpunkt ein aus digitalen Daten bestehendes Signal regeneriert wird, bevor es zu dem nächsten Knotenpunkt übertragen wird. Solche Anordnungen führen aufgrund der zu verwendenden Verstärker und aktiven Knotenpunkte zu wesentlich höheren Kosten im Vergleich zu einer eingangs beschriebenen Sammelschienen-Topologie mit passiven Knotenpunkten.

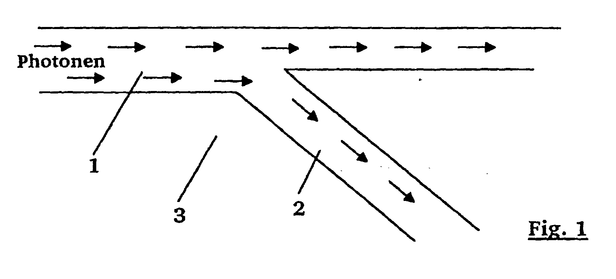

Eine Bus-Topologie ist nur mit einer reduzierten Anzahl von passiven Knotenpunkten realisierbar, weil bei einem passiven Knotenpunkt aus zwei Lichtwellenleitern ca. 50% der von einem Lichtwellenleiter übertragenen Daten auf den anderen Lichtwellenleiter aufgeteilt werden. Somit wird nach diesem Knotenpunkt etwa die gleiche Lichtleistung in beiden Lichtwellenleitern übertragen. Dieser Sachverhalt ist aus Fig. 1 ersichtlich, wo ein passiver Y-Knotenpunkt dargestellt ist.

Relevanter Stand der Technik ist auch in Dokument JP02120705 zu finden.

Der Erfindung liegt daher die Aufgabe zugrunde, eine Anordnung der eingangs genannten Art zu schaffen, mit der eine Verbesserung der übertragenen Lichtleistung und somit eine wesentlich erhöhte Anzahl von passiven Knotenpunkten in einem optischen Netzwerk ermöglicht wird.

Die Aufgabe wird erfindungsgemäß durch die Kopplungsvorrichtung gemäß Anspruch 1 gelöst. Weitere Ausgestaltungen der Erfindung sind in den Abhängigen Ansprüchen definiert.

Ein wesentlicher Vorteil der Erfindung ist darin zu sehen, daß die Anordnung zur Übertragung von digitalen Daten ohne den Gebrauch von irgendwelchen Verstärkern realisiert wird.

Erfindungsgemäß können die an den Knotenpunkten angeordneten Kopplungskörper aus Polycarbonat hergestellt sein und/oder jeweils Linsensysteme aufweisen.

In der Zeichnung sind Ausführungsbeispiele der Erfindung schematisch dargestellt. Es zeigen:
- Fig. 1:: einen passiven Y-Knotenpunkt nach dem Stand der Technik;
- Fig. 2:: einen optisch-optisch ausgebildeten Knotenpunkt mit einer Kopplungsfläche;
- Fig. 3:: einen mit einem Kopplungskörper versehenen Knotenpunkt gemäß Fig. 2, wobei der Kopplungskörper in einem Ausschnitt vergrößert dargestellt ist;
- Fig. 4:: den in Fig. 3 dargestellten Kopplungskörper mit vergrößert dargestellter Prismenstruktur; und
- Fig. 5:: einen optisch-elektrisch ausgebildeten Knotenpunkt.

Aus Fig. 1 ist ersichtlich, daß die Lichtwellenleiter 1 und 2 an einem passiven Y-Knotenpunkt 3 zusammengeführt sind. An diesem Knotenpunkt wird die in dem Lichtwellenleiter 1 übertragene und in Form von Lichtteilchen (Photonen) symbolisch dargestellte Lichtleistung aufgeteilt. Wie bereits eingangs erwähnt, wird somit an dem Knotenpunkt 3 ca. 50% der im Lichtwellenleiter 1 übertragenen Lichtleistung an den Lichtwellenleiter 2 abgegeben.

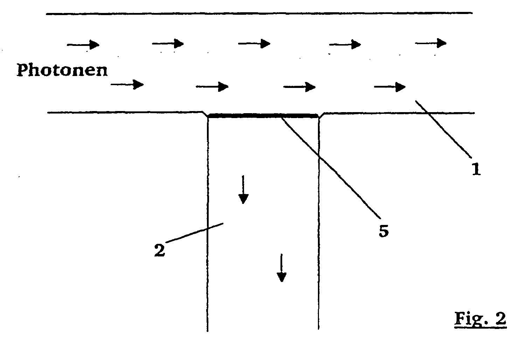

Durch den in Fig. 2 dargestellten optisch-optischen Knotenpunkt 4 wird eine wesentliche Leistungsverbesserung ermöglicht. Dieser Knotenpunkt weist eine speziell ausgebildete Kopplungsfläche 5 auf, die in unmittelbarer Nähe der zusammengeführten Lichtwellenleiter 1 und 2 angeordnet ist. Die Kopplungsfläche 5 ist so ausgebildet, daß eine maximale exakt definierte Reflektion des Lichts an dem Knotenpunkt erzielt wird. Es wird somit in dem Lichtwellenleiter 1 eine maximale Lichtleistung zu einem nachfolgenden Knotenpunkt übertragen, während eine definierte minimale Lichtleistung in den mit der Kopplungsfläche 5 versehenen Lichtwellenleiter 2 eingekoppelt wird.

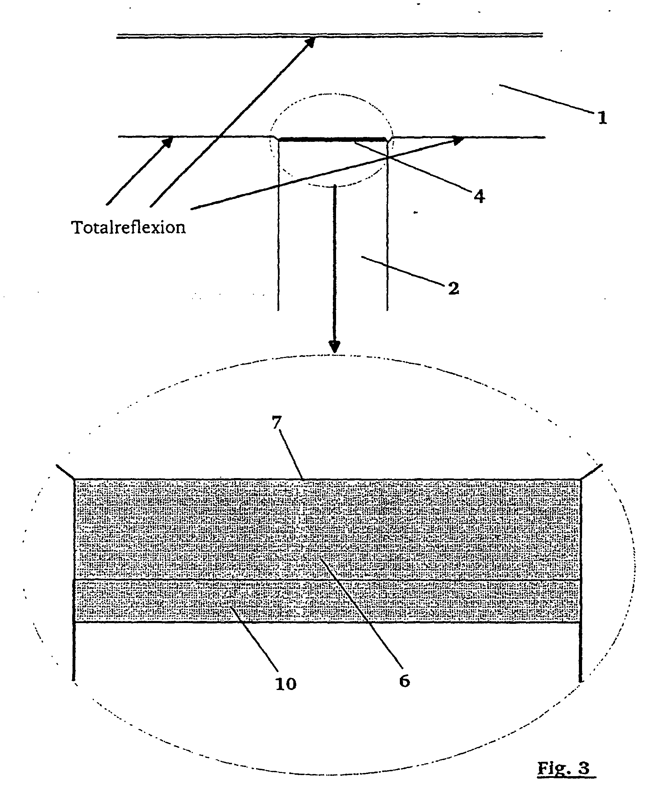

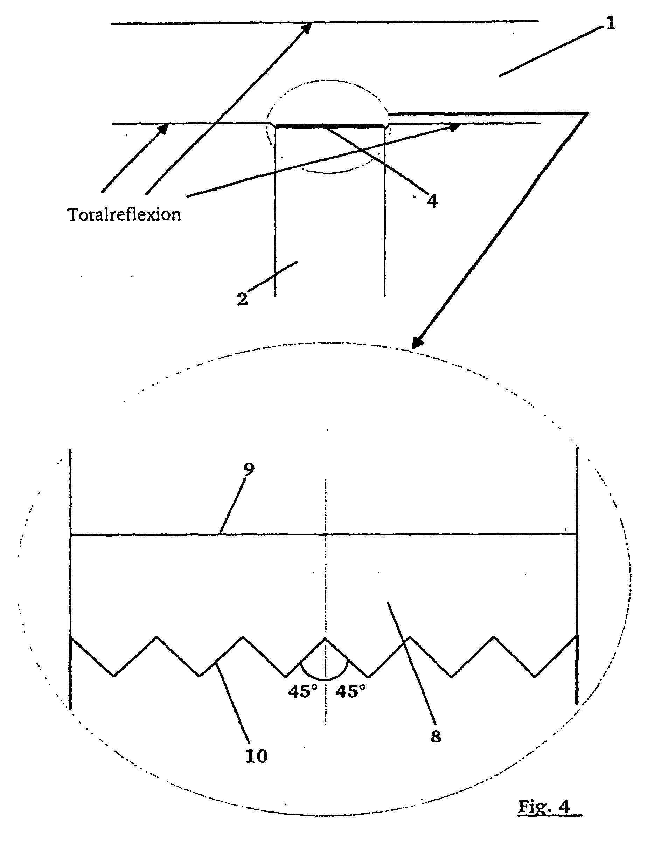

In den Fig. 3 und 4 ist an der Kopplungsfläche 5 jeweils ein Kopplungskörper 6 bzw. 8 angeordnet. Der Kopplungskörper weist eine glatte und eine mit einer Prismenstruktur versehene Oberfläche auf. Hierbei zeigt die glatte Oberfläche 7 bzw. 9 des Kopplungskörpers 6 bzw. 8 zu dem die maximale Lichtleistung übertragenden Lichtwellenleiter 1 und die Prismenstruktur 10 in Richtung des die abgetrennte definierte minimale Lichtleistung aufnehmenden Lichtwellenleiters 2.

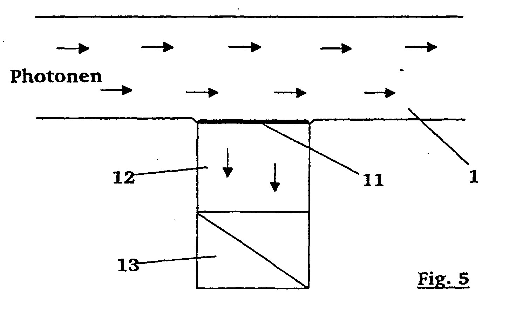

Fig. 5 zeigt als Beispiel für einen optisch-elektrisch ausgebildeten Knotenpunkt 11 eine aus einem optischen Kopplungskörper 12 und einem Opto-Koppler 13 bestehende Anordnung.

Die Bauelemente sind in unmittelbarer Nähe des Knotenpunktes im Lichtwellenleiter 2 angeordnet, wobei der Kopplungskörper 12 dem Lichtwellenleiter 1 am nächsten liegt. Dieser Kopplungskörper kann - ebenso wie die oben beschriebenen Kopplungskörper 6 und 8 - aus Polycarbonat hergestellt sein. Außerdem können die Kopplungskörper mit zeichnerisch nicht dargestellten Linsensystemen ausgerüstet sein. Hierdurch ist eine Realisierung mit größeren Abmessungen der Knotenpunkte möglich.

Mit den Kopplungskörpern wird die eingangs beschriebene Verbesserung der übertragenen Lichtleistung aufgrund von physikalischen Gesetzen der Optik erreicht. Während bei der in Fig. 1 dargestellten Ausführungsform nach dem Stand der Technik an jedem aufeinanderfolgenden Knotenpunkt ca. 50% der übertragenen Lichtleistung abgetrennt werden, ist es beispielsweise mit der erfindungsgemäßen Technologie möglich, nur 2% der in einem Lichtwellenleiter übertragenen Lichtleistung abzutrennen. In dem Beispiel wird davon ausgegangen, daß in einem System 0,8% der Quellen-Lichtleistung erforderlich ist, um ein Signal zu detektieren. Eine Gegenüberstellung dieses Beispiels zum Stand der Technik zeigt die folgende Tabelle.

| Knotenpunkte Anzahl | abgetrennte Lichtleistung [%] | |
|---|---|---|
| | Stand der Technik | Erfindung |
| 1 | 50,00% | 2,00% |
| 2 | 25,00% | 1,96% |
| 3 | 12,50% | 1,92% |
| 4 | 6,25% | 1,88% |
| 5 | 3,13% | 1,84% |
| 6 | 1,56% | 1,80% |
| 7 | 0,78% | 1,76% |
| 8 | ... | 1,72% |
| . | ... | ... |
| 30 | ... | 0.84% |
| 31 | ... | 0,80% |

Aus der Tabelle ist zu entnehmen, daß mit der bisher vorhandenen Technologie eine Hintereinanderschaltung von maximal 7 Knotenpunkten möglich ist, während die erfindungsgemäße Technologie eine Reihenschaltung von insgesamt 31 Knotenpunkten ermöglicht.

Geht man in einem anderen Beispiel davon aus, daß an jedem Knoten nur 1% der Quellen-Lichtleistung ausgekoppelt wird und 0,4% ausreichen, um die Daten zu detektieren, so ist das Verhältnis der maximal hintereinander geschalteten Knoten 8 zu 61.

### Bezugszeichenliste

- 1: Lichtwellenleiter
- 2: Lichtwellenleiter
- 3: passiver Knotenpunkt
- 4: optisch-optischer Knotenpunkt
- 5: Kopplungsfläche

- 6: Kopplungskörper
- 7: glatte Oberfläche des Kopplungskörpers 6
- 8: Kopplungskörper
- 9: glatte Oberfläche des Kopplungskörpers 8
- 10: Prismenstruktur der Kopplungskörpers 6 oder 8

- 11: optisch-elektrischer Knotenpunkt
- 12: optischer Kopplungskörper
- 13: Opto-Koppler

## Patentansprüche

1. Optische Kopplungsanordnung bestehend aus einem ersten und einem zweiten Lichtwellenleiter (1, 2) sowie einem passiven Knotenpunkt (3) an der Verbindungsstelle der beiden Lichtwellenleiter (1, 2) zur Übertragung von digitalen Daten, wobei zur Aufteilung der in Form von Licht übertragenen Daten in die zusammengeführten Lichtwellenleiter (1, 2) der Knotenpunkt (3) im Eingangsbereich des zweiten zugeordneten Lichtwellenleiters (2) eine Kopplungsfläche (5) aufweist, an der ein eine glatte Oberfläche (9) und eine Prismenstruktur (10) aufweisender Kopplungskörper (8) vorgesehen ist,
**dadurch gekennzeichnet, daß** die glatte Oberfläche (9) des Kopplungskörpers (8) zu dem den größeren Anteil der Lichtleistung (maximale Lichtleistung) übertragenden ersten Lichtwellenleiter (1) und die Prismenstruktur (10) des Kopplungskörpers in Richtung des die abgetrennte geringere Lichtleistung (definierte minimale Lichtleistung) aufnehmenden zweiten Lichtwellenleiters (2) zeigt.

2. Vorrichtung nach Anspruch 1, **dadurch gekennzeichnet, daß** der Kopplungskörper (6, 8, 12) aus Polycarbonat hergestellt ist.

3. Vorrichtung nach Anspruch 1 oder 2, **dadurch gekennzeichnet, daß** der an einem optisch-optisch ausgebildeten Knotenpunkt (4) angeordnete Kopplungskörper (6, 8, 12) ein Linsensystem aufweist.

## Claims

1. Optical coupling arrangement for the transmission of digital data, consisting of a first and a second optical waveguide (1, 2) and a passive node (3) at the junction of the two optical waveguides (1, 2), wherein the node (3) has a coupling face (5), on which a coupling body (8) having a smooth surface (9) and a prism structure (10) is provided, in the input region of the second assigned optical waveguide (2) in order to distribute the data transmitted in the form of light into the connected optical waveguides (1, 2), **characterised in that** the smooth surface (9) of the coupling body (8) faces the first optical waveguide (1), which transmits the majority of the optical power (maximum optical power), and the prism structure (10) of the coupling body faces in the direction of the second optical waveguide (2), which receives the extracted lower optical power (defined minimum optical power).

2. Device according to Claim 1, **characterised in that** the coupling body (6, 8, 12) is made of polycarbonate.

3. Device according to Claim 1 or 2, **characterised in that** the coupling body (6, 8, 12) arranged at a node (4) of optical-optical design has a lens system.

## Revendications

1. Système de raccordement optique constitué d'un premier et d'un deuxième guide d'ondes optiques (1, 2) ainsi que d'un point nodal passif (3) au point de raccordement des deux guides d'ondes optiques (1, 2) pour la transmission de données numériques, le point nodal présentant, dans la zone d'entrée du deuxième guide d'ondes optiques raccordé (2), une surface de raccordement (5) destinée à diffuser les données transmises sous la forme de lumière dans les guides d'ondes optiques regroupés, et contre laquelle un corps de raccordement (8) présentant une surface plane (9) et une structure prismatique (10) a été prévu, **caractérisé en ce que** la surface plane (9) du corps de raccordement (8) pointe en direction du premier guide d'ondes optiques (1) transmettant la plus grande part de luminosité (luminosité maximale) et la structure prismatique (10) du corps de raccordement pointe en direction du deuxième guide d'ondes optiques recevant la luminosité plus faible séparée (luminosité minimale définie).

2. Dispositif selon la revendication 1, **caractérisé en ce que** le corps de raccordement (6, 8, 12) est en polycarbonate.

3. Dispositif selon la revendication 1 ou 2, **caractérisé en ce que** le corps de raccordement (6, 8, 12) disposé contre un point nodal (4) optique-optique présente un système de lentilles.
